# EUROPÄISCHE PATENTSCHRIFT

(11) **EP 3 208 475 B1**
(45) Veröffentlichungstag und Bekanntmachung des Hinweises auf die Patenterteilung: **10.07.2019**
(21) Anmeldenummer: 17155860.4
(22) Anmeldetag: 13.02.2017
(51) Int. Cl.: F16B 5/06, G09F 15/00

(54) **SPANNVORRICHTUNG FÜR FLEXIBLES BAHNFÖRMIGES MATERIAL**
TENSIONING DEVICE FOR FLEXIBLE WEB MATERIAL
DISPOSITIF DE SERRAGE POUR UN MATÉRIAU SOUPLE EN BANDE

(30) Priorität: 16.02.2016 DE 102016001726
(43) Veröffentlichungstag der Anmeldung: 23.08.2017
(73) Patentinhaber: Haas, Franz-Peter, 47559 Kranenburg (DE)
(72) Erfinder: Haas, Franz-Peter, 47559 Kranenburg (DE)
(74) Vertreter: Demski, Siegfried

(56) Entgegenhaltungen:
- US-A- 5 479 733
- US-A1- 2015 213 740

## Beschreibung

Die Erfindung betrifft eine Spannvorrichtung für flexibles bahnförmiges Material, umfassend zumindest ein Klemmprofil mit Nuten in den Seitenflächen und wenigstens einem Klemmelement welches unter Vorspannung zumindest eine Längskante des Klemmprofils umgreift, wobei das Klemmelement im Querschnitt aus einem abgewinkelten Basisteil mit zwei Schenkeln besteht, wobei das Klemmelement mit einer ersten Außenkante in einer Nut des Klemmprofils einhängbar ist und mit dem zweiten Schenkel unter Federvorspannung in einer zweiten Nut des Klemmprofils einrastend aufgenommen ist.

Spannvorrichtungen für flexible Materialien sind in vielfältiger Form bekannt, beispielsweise können Banner oder Werbeplakate mithilfe von Spanngurten an vertikal oder horizontal angeordneten Trägern befestigt werden. Alternativ besteht die Möglichkeit Werbeträger mithilfe einer Profilleiste und einem Klemmelement in horizontaler oder vertikaler Richtung zu verspannen. Zu diesem Zweck weisen die Profilelemente zumindest teilweise Nuten auf, in die die Klemmelemente zusammen mit dem bahnförmigen Material eingepresst werden können. Zum Teil werden zu diesem Zweck Spannrahmen eingesetzt, die an die Abmessungen des bahnförmigen Materials angepasst sind und im gesamten Randbereich eine Verklemmung des bahnförmigen Materials ermöglichen.

Stellvertretend wird auf die internationale Anmeldung PCT/DE94/00722 verwiesen, welche eine Vorrichtung zur Halterung von gespanntem bogenförmigem Material betrifft. In diesem Fall werden Haltemittel verwendet, die aus paarweise zusammenwirkenden, im Wesentlichen runden Stangen bestehen, welche sich zumindest in einem Teilbereich einer Nut befinden. Hierzu wird das bogenförmige Material um die erste Stange gewickelt, welche in der Nut gegen einen Vorsprung abgestützt ist, wobei auf der Oberfläche der ersten Stange und im Bereich der Oberfläche der Nut eine im Querschnitt keilförmige Rille ausgebildet ist, in welche die zweite Stange eingelegt und zusammen mit der ersten Stange verkeilt wird.

Aus der DE 38 42 089 A1 ist eine Vorrichtung zur Befestigung von bahnförmigem Material bekannt, welche ein Befestigungsprofil und ein elastisch verformbares Klemmelement aufweist. Das elastisch verformbare Klemmelement wird hierbei durch eine Aufnahmeöffnung in das Befestigungsprofil mit der zu befestigenden Materialbahn eingebracht und mithilfe einer Spannschraube und einer Flügelmutter derart verformt, dass das verformbare Klemmelement innerhalb einer Aufnahmeöffnung des Befestigungsprofil verspannt werden kann. Das Befestigungsprofil weist zu diesem Zweck eine mit unterschiedlichen Radien ausgestattete Nut auf, in die das Klemmelement durch einen vorhandenen Spalt eingeführt und mithilfe der Spannmittel zwischen den Rundungen verpresst werden kann.

Das US-Patent 5,479,733 offenbart einen Rahmen, welcher zur Halterung eines scheibenförmigen Materials vorgesehen ist. Die Verwendung eines elastischen bahnförmigen Materials mit dem offenbarten Profil ist nur eingeschränkt möglich.

Aus der US-Anmeldung 2015/0213740 A1 ist ein Klemmelement bekannt, welches mit einem Klemmprofil verwendet wird und zum Einklemmen eines bahnförmigen Materials vorgesehen ist.

Die bekannten Vorrichtungen sind für den vorgesehenen Zweck zum Teil ausreichenden, zum Teil können sie die auftretenden Windlasten nicht aufnehmen, wenn insbesondere große bahnförmige Materialien in Form eines Banners oder eines Werbeplakates befestigt werden sollen. Durch den entstehenden Winddruck können beispielsweise elastisch verformbare Elemente aus den vorliegenden Nuten herausgezogen werden, sodass die Verspannung verloren geht. Soweit Klemmelemente eingesetzt werden, die in die vorhandenen Nuten eingreifen, besteht darüber hinaus die Gefahr, dass durch die Bewegung des bahnförmigen Materials aufgrund der Windbelastung die Klemmelemente in den vorhandenen Nuten ihren Halt verlieren und damit die Verspannung nicht mehr gewährleistet ist.

Der vorliegenden Erfindung liegt die Aufgabe zugrunde eine verbesserte Spannvorrichtung aufzuzeigen, welche großen Windbelastungen der befestigten bahnförmigen Materialien standhält.

Erfindungsgemäß ist zur Lösung der Aufgabe vorgesehen, dass das elastische bahnförmige Material zumindest teilweise von dem ersten Ende des Klemmelementes umfassbar ist und unter Federvorspannung in eine Nut und gegen die Seitenflächen des Klemmprofils einklemmbar ist, wobei das Klemmelement im Querschnitt aus einem abgewinkelten Basisteil mit zwei Schenkeln besteht, bei dem ein von dem Basisteil auslaufender zweiter Schenkel zweimal um ca. 90° umgebogen ist und anschließend in entgegengesetzter Biegerichtung bogenförmig ausgebildet und über ein gerades Teilstück in eine um 90° abgewinkelte kurze Außenkante übergeht. Weitere vorteilhafte Ausgestaltungen sind den Unteransprüchen zu entnehmen.

Die erfindungsgemäße Spannvorrichtung sieht vor, dass ein Klemmelement unter Vorspannung zumindest eine Längskante des Klemmprofils umgreift und mit einer ersten Außenkante in einer Nut des Klemmprofils einhängbar ist und mit einem Schenkel unter Federvorspannung in einer zweiten Nut des Klemmprofils einrastend aufgenommen ist. Die Klemmelemente werden hierbei zusammen mit dem bahnförmigen Material verspannt, sodass dieses über die Klemmelemente in den Klemmprofilen befestigt werden kann. Das bahnförmige Material wird hierbei in derart vorgespannt, dass auch größere Windbelastungen unschädlich sind. Die verwendeten Werbeplakate können hierbei mehrere Quadratmeter umfassen und bestehen beispielsweise aus einem Banner, welches aus Papier, Textil, Kunststoff oder einer Textil- Kunststoffkombination bestehen kann. Um bei stärkeren Windbelastungen eine hohe Sicherheit der Befestigung zu gewährleisten, werden zu diesem Zweck Klemmprofile eingesetzt, die vorzugsweise als Rahmen gefertigt werden, die auf die jeweilige Größe der Werbeplakate zugeschnitten sind. Selbstverständlich können die Werbeplakate oder Banner auch nur mit zwei parallel verlaufenden Klemmprofilen entlang der Längs- oder Schmalseiten befestigt werden. Hierbei kommt es im Wesentlichen auf die Größe der Werbeplakate beziehungsweise Banner an und mit welchen Windbelastungen zu rechnen ist.

Durch eine Verspannung über Eck durch die Klemmprofile wird hierbei erreicht, dass die auftretenden Kräfte, welche sich unmittelbar auf die Klemmelemente auswirken, über die Seitenkanten der Klemmprofile verteilt werden und somit ein Herausrutschen der bahnförmigen Materialien aus den Nuten verhindert werden kann. Ferner liegt eine deutlich vergrößerte Reibungsfläche zwischen dem bahnförmigen Material und dem Klemmprofil vor, die sich nicht auf die Enden der Klemmelemente beschränkt. Die angreifenden Kräfte durch die Windbelastung können hierbei nicht beide Kanten der Klemmprofile gleichzeitig belasten, wodurch eine höhere Sicherheit besteht. Durch die Auswahl einer entsprechenden Federkraft, der im Wesentlichen um 90° vorgebogenen Klemmelemente wird hierbei ein Anpressdruck des bahnförmigen Materials an das Klemmprofil erzielt und es kann eine wesentlich höhere Federvorspannung durch die Anlage der Klemmelemente erzielt werden. Somit besteht nicht die Gefahr, dass das bahnförmige Material unterhalb der Klemmelemente wegrutschen kann, vielmehr ist sichergestellt, dass das bahnförmige Material mithilfe der Klemmelemente um die Längskanten des Klemmprofils herumgeführt und gegen das Klemmelement angepresst wird.

Ein von dem Basisteil auslaufender zweiter Schenkel ist zweimal um circa 90 Grad umgebogen und anschließend in entgegengesetzter Biegerichtung bogenförmig ausgebildet und geht über ein gerades Teilstück in eine von circa 90 Grad abgewinkelte kurze Außenkante über. Das bogenförmige Teilstück des zweiten Schenkels bildet eine rastnasenförmige Auswölbung, welche in eine zweite Nut des Klemmprofils eingreifen kann und unter dem Vorsprung der T-förmigen Nut zu liegen kommt, wobei aufgrund des auslaufenden Schenkels eine Verklemmung mit der gegenüberliegenden Seite der T-förmigen Nut erfolgt und damit beim Einklemmen eine Federvorspannung erzeugt wird, die die Rastnase innerhalb der T-förmigen Nut sicher hält.

Durch entsprechende Formgebung der Klemmelemente gegenüber dem Klemmprofil wird eine form- und/oder kraftschlüssige Verbindung zwischen beiden hergestellt und das bahnförmige Material zwischen dem Klemmelement und dem Klemmprofil mit hohem Druck eingeklemmt, wobei die vorhandene Federwirkung der Klemmelemente zum Anpressen des bahnförmigen Materials an das Klemmprofil führt.

Erfindungsgemäß ist vorgesehen, dass das Klemmelement mit einer ersten Außenkante in einer Nut des Klemmprofils einhängbar ist und mit einem Schenkel unter Federvorspannung in einer zweiten Nut des Klemmprofils einrastend aufgenommen ist. Die Besonderheit der Spannvorrichtung liegt somit darin, dass einerseits das bahnförmige Material um eine Außenkante des Klemmprofils geführt wird und andererseits das Klemmelement mit einer ersten Außenkante in einer Nut des Klemmprofils einhängbar ist, und zwar zusammen mit dem bahnförmigen Material und mit der zweiten Außenkante unter Federvorspannung in einer zweiten um 90° verdrehten Nut des Klemmprofils zusammen mit dem bahnförmigen Material einrastend aufgenommen wird. Das bahnförmige Material kommt hierbei zwischen dem Klemmelement und dem Klemmprofil zu liegen und kann durch die besondere Form des Klemmelementes nach dem Einhängen mit einer ersten Außenkante und dem Einklemmen der zweiten Außenkante mit dem gleichzeitigen Eindrücken in der vorhandenen Nut zusätzlich nachgespannt werden, sodass das Banner über die gesamte Fläche unter Vorspannung steht. Zu diesem Zweck wird das Klemmprofil auf zumindest zwei Seitenflächen, vorzugsweise sämtlichen benachbarten Seitenflächen mit einer T-förmigen Nut ausgestattet, damit jede beliebige Seitenkante des Klemmprofils zur Einspannung des bahnförmigen Materials verwendet werden kann. Die T-förmigen Nuten dienen zur Aufnahme der Klemmelemente, welche entsprechend der vorliegenden Formgebung einerseits eingehängt und andererseits einrastet mit dem Klemmprofil verriegelt werden können. Hierbei umgreifen in jedem Fall die Klemmelemente den Kantenbereich des Klemmprofiles. Der besondere Vorteil dieser Befestigungsart liegt im Weiteren darin, dass je stärker die Zuglast des elastischen Materials ist, umso fester wird das Klemmelement in die Nut gezogen.

Um eine Beschädigung des bahnförmigen Materials auszuschließen wird vorzugsweise das Klemmprofil mit abgerundeten Kanten ausgeführt. Vorzugsweise werden hierbei Klemmprofile mit einem mehreckigen, dreieckförmigen, rechteckförmigen oder quadratischen Querschnitt eingesetzt, die ein Verspannen über eine Längskante des Klemmprofils ermöglichen. Die verwendeten Klemmelemente und Klemmprofile werden hierbei vorzugsweise an die Größe der bahnförmigen Materialien angepasst, damit diese über die gesamte Breite oder Länge verspannt werden können, wobei das bahnförmige Material immer größer zugeschnitten wird, damit es um die Klemmprofile herumgeführt werden kann. Über große Materialien können nach hinten eingeschlagen werden und sind von vorne nicht sichtbar, wodurch die Handhabung wesentlich vereinfacht wird. Soweit ein zu großer Überstand vorliegen sollte, kann dieser mit einer Schere oder einem Messer abgeschnitten werden. Hierbei besteht die Möglichkeit sowohl quadratische als auch rechteckförmige Banner zu verspannen, wobei insbesondere eine Verspannung mit einem vorgefertigten Rahmen aus den Klemmprofilen möglich ist.

Die Klemmelemente können bevorzugt über die gesamte Länge der Klemmprofile entlang einer Seitenkante einstückig ausgebildet sein, es besteht darüber hinaus die Möglichkeit mehrere nebeneinander liegende Klemmelemente zu verwenden, die nacheinander zum Verspannen des bahnförmigen Materials herangezogen werden. In einfachen und weniger windbelasteten Umgebungen besteht hierbei die Möglichkeit, die Klemmelemente gegenüber dem Klemmprofilen verkürzt auszuführen und vorzugsweise im Eckbereich eines vorgefertigten Rahmens aus dem Klemmprofil einzusetzen.

Die Geometrie der Klemmelemente richtet sich hierbei im Wesentlichen nach der Geometrie des Klemmprofils, wenn beispielsweise ein dreieckförmiges Klemmprofil eingesetzt wird, werden die auslaufenden Schenkel des Klemmelementes einen Winkel von 120 Grad aufweisen, während bei einem quadratisch- oder rechteckförmigen Profilquerschnitt die auslaufenden Schenkel ein Winkel von 90 Grad bilden. Um eine Verspannung mit dem Profilelementen sicher zu stellen und eine Vorspannung auf das bahnförmige Material zu erzeugen, können die Klemmelemente hierbei derart gefertigt, dass sie einen kleineren Winkel als 90° oder 120° nach der Herstellung aufweisen und erst beim Verspannen mit den Klemmprofilen zunächst aufgeweitet und nach der Aufnahme in den T-förmigen Nuten eine Position einnehmen, die an die Form der Klemmprofile angepasst ist und zu einer Vorspannung gegenüber dem bahnförmigen Material und dem Klemmprofil führen.

Die Klemmelemente können hierbei vorzugsweise aus einem Federblech bestehen, welches aufgrund seiner Federeigenschaft hervorragend geeignet ist, für die entsprechende Vorspannung zu sorgen. Alternativ besteht die Möglichkeit, Strangpressprofile oder Extrusionsprofile zu verwenden, beispielsweise aus Aluminium oder Kunststoff, die den gleichen Zweck erfüllen und aufgrund vorhandener Biegeelastizität ebenfalls mit einem Klemmprofil verbunden werden können. Die Klemmelemente können hierbei an die Breite der bahnförmigen Materialien angepasst und einstückig ausgebildet sein oder aus mehreren Teilstücken bestehen, welche beabstandet zueinander angeordnet sind oder beispielsweise nur im Eckbereich des bahnförmigen Materials zum Einsatz kommen.

In weiterer besonderer Ausgestaltung der Erfindung ist vorgesehen, dass das Klemmelement im Querschnitt aus einem abgewinkelten Basisteil besteht, welches mit einem ersten Schenkel unter einem Winkel von 120 bis 150 Grad abgewinkelt ist und eine zweite Abkantung von circa 80 bis 85 Grad aufweist, die eine deutlich verkürzte Länge aufweist, sodass diese Abkantung innerhalb der T-förmigen Nut unter den Nutbegrenzungen der Klemmprofile zu liegen kommt.

Die besondere Ausgestaltung der Spannvorrichtung für bahnförmiges Material entsteht hierbei dadurch, dass das bahnförmige Material durch die Klemmelemente gegen die Seitenflächen des Klemmprofils gepresst wird und das elastisch bahnförmige Material zumindest teilweise vom ersten Ende des Klemmelementes umfasst ist und unter Federvorspannung in die Nut und gegen die Seitenflächen des Klemmprofils einklemmbar ist. Hierzu besteht die Möglichkeit das bahnförmige Material entlang zumindest zweier paralleler Seitenkanten mit zumindest einem Klemmelement zu verspannen oder das bahnförmige Material entlang sämtlicher Seitenkanten mit jeweils zumindest einem Klemmelement zu verspannen.

Der besondere Vorteil der vorliegenden Erfindung besteht darin, dass mithilfe der Klemmelemente und Klemmprofile ein leichter Austausch der Werbebanner in regelmäßigen Abständen erfolgen kann, wobei zu diesem Zweck lediglich das Klemmelement gegen die eigene Federkraft aus der T-förmigen Nut des Kunststoffprofiles durch Zusammendrücken und Herausziehen entfernt werden kann und nach dem Aushängen aus der zweiten T-förmigen Nut das bahnförmige Material freigegeben wird. Aufgrund der hohen Federkraft können die Klemmelemente hierbei wiederholt verwendet werden, um beispielsweise ein auszutauschendes Werbebanner zu halten. Umgekehrt gestaltet sich das Einsetzen der Klemmelemente sehr einfach, weil diese zusammen mit dem bahnförmigen Material in eine erste T-förmige Nut eingehängt, über die Kante des Klemmprofils gezogen und gleichzeitig mit dem Klemmelement gegen die Seitenflächen des Klemmprofils gedrückt wird, wobei nach Einführen des Klemmelementes in die zweite T-förmige Nut neben einer Verspannung des bahnförmigen Materials die entsprechende Verriegelung mit dem Klemmprofil erfolgt, wobei die vorhandene Rastnase die zweite T-förmige Nut hintergreift und damit die Verklemmung gewährleistet ist. Hierbei liegt der besondere Vorteil vor, dass die beiden Außenkanten des Klemmelementes hinsichtlich der form- oder kraftschlüssigen Verbindung durch zwei T-Nuten gehalten werden, die einen Winkel von 90° zueinander aufweisen, wodurch eine verbesserte Kräfteverteilung und Haltekraft erzielt wird.

Die Erfindung wird im Weiteren anhand der Figuren nochmals erläutert.

Es zeigt
- Fig. 1: in einer perspektivischen Ansicht die Einzelteile einer Spannvorrichtung, einschließlich des aufspannenden bahnförmigen Materials,
- Fig. 2: in einer Draufsicht eine mögliche Ausführungsform eines Klemmprofils,
- Fig. 3: in einer Draufsicht ein Klemmelement,
- Fig. 4: in zwei Schnittzeichnungen die Befestigung eines Banners an den Klemmprofilen mithilfe der Klemmelemente und
- Fig. 5: in mehreren perspektivischen Ansichten die Vorgehensweise zur Befestigung des bahnförmigen Materials.

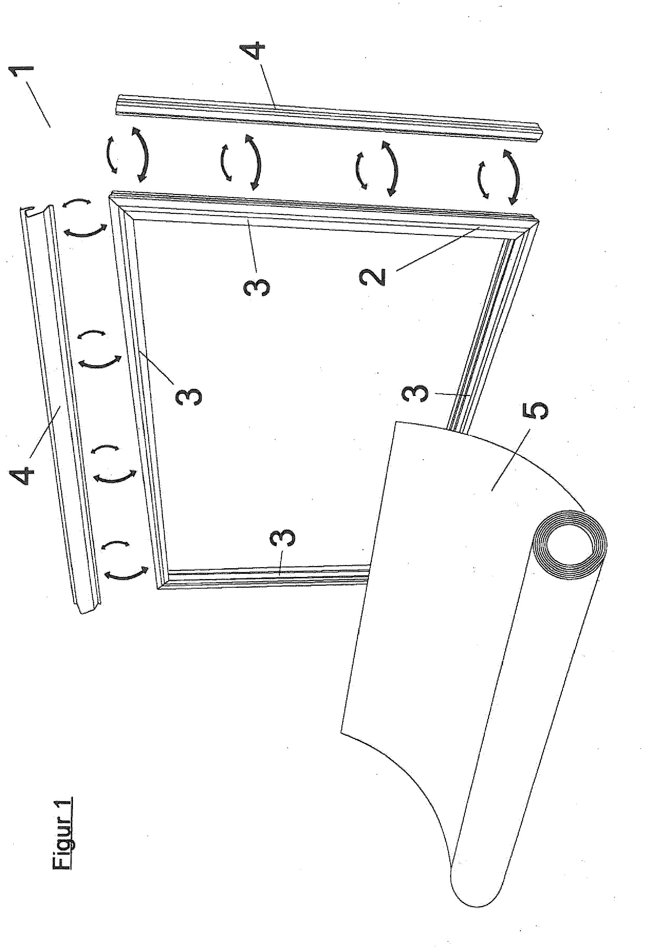

Figur 1 zeigt in einer perspektivischen Ansicht die Einzelteile einer Spannvorrichtung 1, bestehend aus einem Rahmen 2, welcher aus mehreren einzelnen Klemmprofilen 3 besteht. Davon seitlich beabstandet zwei Klemmelemente 4 die zur Befestigung des bahnförmigen Materials 5 vorgesehen sind. Das bahnenförmige Material 5 ist zum Teil zusammengerollt und zum Teil abgerollt dargestellt und wird auf den Rahmen 2 gelegt, sodass die Randseiten nach hinten umgeschlagen werden können. Zur Befestigung dienen die Klemmelemente 4, welche zusammen mit dem bahnförmigen Material 5 in vorhandene Nuten der Klemmprofile 3 eingehängt und verklemmt werden. Die Klemmelemente 4 sind hierbei entsprechend der gewählten Dimensionierung des Spannrahmens 2 in ihrer Länge angepasst, wobei aber auch die Möglichkeit besteht mehrere kurze Klemmelemente 4 einzusetzen, die vorzugsweise im Eckbereich aber auch an den Längsseiten angeordnet werden können. Hierzu wird das bahnförmige Material 5 auf den Rahmen 2 gelegt und eine Seitenkante mithilfe der Klemmelemente 4 erfasst und in die vorhandenen Nuten gedrückt und gleichzeitig mithilfe des Klemmelementes 4 verspannt.

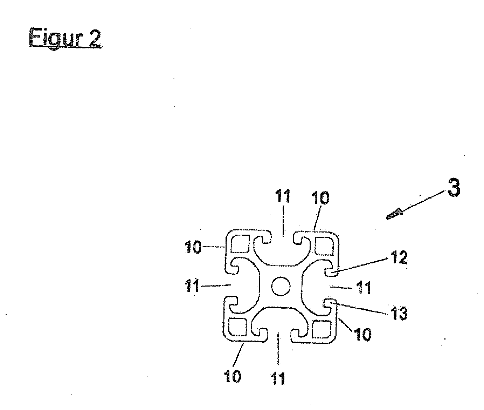

Figur 2 zeigt in einer Draufsicht eine mögliche Ausführungsform eines Klemmprofils 3. Im gezeigten Ausführungsbeispiel ist das Klemmprofil 3 quadratisch ausgebildet, es besteht jedoch ohne weiteres die Möglichkeit Vieleckprofile, insbesondere rechteckförmige oder dreieckförmige Profile zu verwenden. Das Klemmprofil 3 zeichnet sich dadurch aus, dass es auf jeder Seitenfläche 10 eine Nut 11 aufweist. Im gezeigten Ausführungsbeispiel sind die Nuten 11 im hinteren Bereich abgerundet und gehen im vorderen Bereich zu den Seitenflächen 10 in Auskragungen 12, 13 über, welche den offenen Bereich der Nut 11 begrenzen und gleichzeitig die Möglichkeit eines Einhängen der Klemmelemente 4 bieten. In den Nuten 11 könnten ferner beispielsweise Nutensteine eingeführt werden, um die Klemmprofile 3 an einer Wand, einem Träger oder Gerüst zu befestigen. Im Wesentlichen dienen die Nuten 11 dazu, mithilfe eines Klemmelementes 4, das bahnförmige Material 5 zu verspannen.

In der gezeigten Standardausführung des Klemmprofils 4 wird ein Außenmaß von 40 x 40 mm mit einer 8 mm Nut 11 bevorzugt, jedoch sind alle denkbaren Querschnittsformen einsetzbar, sofern sichergestellt ist, dass jeweils eine Seitenfläche 10 mit einer Nut 11 ausgestattet ist. Diese Klemmprofile 4 werden hierbei vorzugsweise, sofern ein Rahmen aufgebaut werden soll, im Eckbereich auf Gärung zugeschnitten, könnten aber auch stumpf mithilfe eines Winkels verbunden werden.

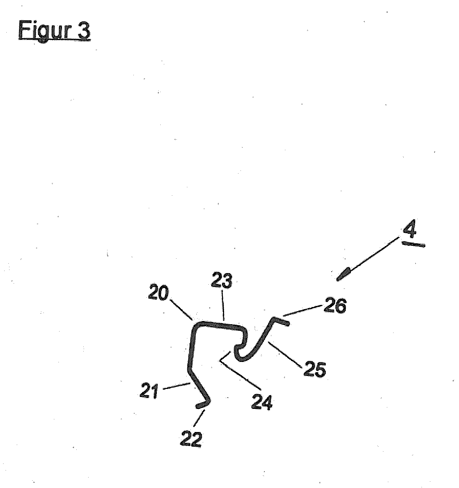

Figur 3 zeigt in einer Draufsicht eine mögliche Form eines Klemmelementes 4, welches in Verbindung mit den Klemmprofilen 3 eine Verspannung des bahnförmigen Materials ermöglicht. Das Klemmelement 4 kann beispielsweise aus einem gebogenen Federstahl, aus einem Aluminiumstrangpressprofil oder einem extrudierten Kunststoffprofil bestehen. Wichtig ist, dass das Klemmelement 4 zumindest so elastisch ist, dass die Außenkanten des Klemmelementes 4 elastisch aufgebogen werden können und in ihren ursprünglichen Zustand zurückfedern. Die gezeigte Ausführungsform des Klemmelementes 4 besteht aus einem annähernd rechtwinkligen Basisteil 20, welches in einen ersten Schenkel 21 ausläuft, der unter einem Winkel von 120°- 150° abgewinkelt ist. An der äußeren Kante des ersten Schenkels 21 befindet sich einen zweite um ca. 80°bis 90° vorhandene Abkantung als Außenkante 22. Durch die spezielle Form der Abkantung kann diese in die vorhandenen Klemmprofile 3 in die vorhandenen Nuten eingehängt und verspannt werden. Ein zweiter auslaufender Schenkel 23 ist zunächst zweimal um ca. 90° in Richtung auf den ersten Schenkel 21 umgebogen und anschließend in entgegengesetzter Richtung bogenförmig ausgebildet. Die bogenförmige Ausbildung bildet eine Nase 24, welche ebenfalls in die vorhandenen Nuten des Klemmprofils einrastend aufgenommen werden kann. Über ein gerades Teilstück 25 geht der zweite Schenkel 23 durch eine 90 °-Abkantung in eine kurze Außenkante 26 über.

Alternative Formen des Klemmelements 4 sind denkbar, die sich an den Verlauf des Klemmprofils 3 anpassen, wobei im weiteren sichergestellt sein muss, dass die Abkantung 22 in eine vorhandene Nut des Klemmprofils aufgenommen werden kann und die Nase 24 in einer weiteren Nut des Klemmprofils federnd einrastend ebenfalls aufgenommen werden kann. Die Nuten dürfen zudem nicht in einer Ebene liegen.

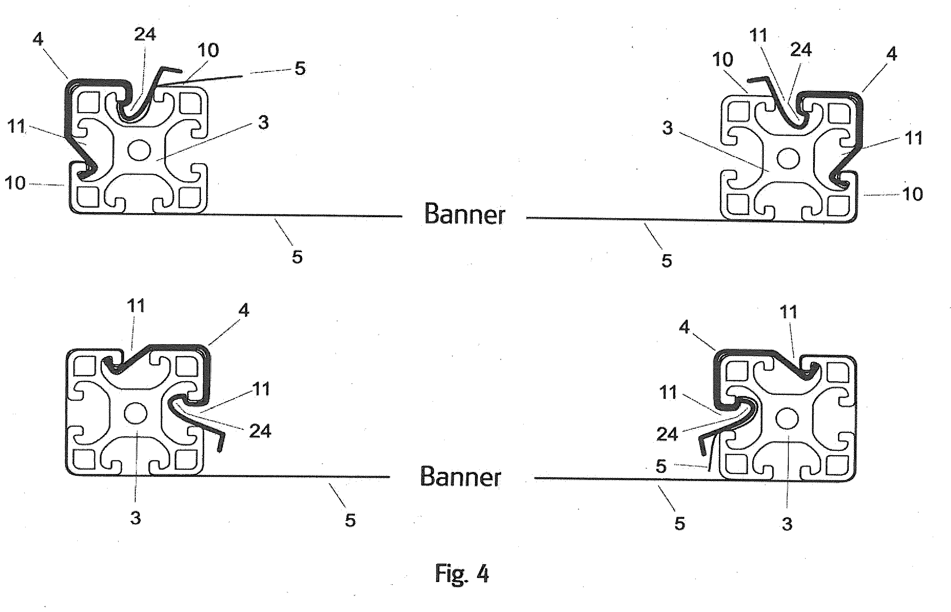

Figur 4 zeigt in einem Querschnitt zwei mögliche Befestigungsmethoden um ein bahnförmiges Material 5 in Form eines Banners mithilfe der Klemmprofile 3 und den Klemmelementen 4 zu verspannen.

In der oberen Abbildung wird zur Verklemmung des bahnförmigen Materials 5 eine erste Nut 11 in den nach außen gerichteten Flächen 10 sowie eine zweite Nut 11 in den hinteren Flächen 10 des Profilelementes 3 verwendet. Die Klemmelemente 4 umgreifen somit die hinteren äußeren Kanten der Klemmprofile 3. Das bahnförmige Material wird durch die Klemmelemente 4 erfasst und in die ersten nach außen gerichteten Nuten 11 gedrückt, wobei gleichzeitig das Klemmelement 4 in die Nut 11 eingehängt wird. Das bahnförmige Material 5 wird im Anschluss um die hintere äußere Kante gezogen und mithilfe der ausgebildeten Nase 24 in die zweite Ausnehmung 11 gepresst, wobei gleichzeitig das Klemmelement 4 einrastend in dem Klemmprofil 3 aufgenommen wird. Das bahnförmige Material 5 liegt hierbei zumindest an den rechtwinklig zueinander angeordneten Seitenflächen 10 des Klemmprofils 3 an und wird mithilfe des Klemmelementes 4 gegen das Klemmprofil 3 gedrückt, sodass auch größere einwirkende Kräfte auf das bahnförmige Material 5 durch das Klemmelement 4 aufgefangen wird.

In der unteren Darstellung ist eine alternative Befestigungsform für das bahnförmige Material 5 dargestellt, und zwar wird in diesem Fall die hintere innere Kante des Klemmprofils 3 verwendet und das bahnförmige Material 5 damit um die beiden äußeren Kanten des Klemmprofils 3 sowie die hintere innere Kante verspannt, um mithilfe des Klemmelements 4 gegen die Seitenflächen 10 des Klemmprofils 3 gedrückt zu werden. Die Verrastung des Klemmelements 4 erfolgt analog zur ersten Befestigungsmöglichkeit aufgrund der vorhandenen Symmetrie der Klemmprofile 3 mit identischen Klemmelementen 4 in zwei Nuten der Klemmprofile 3, wobei die Nuten 21 zweier rechtwinkelig zueinander angeordneten Seitenflächen verwendet werden.

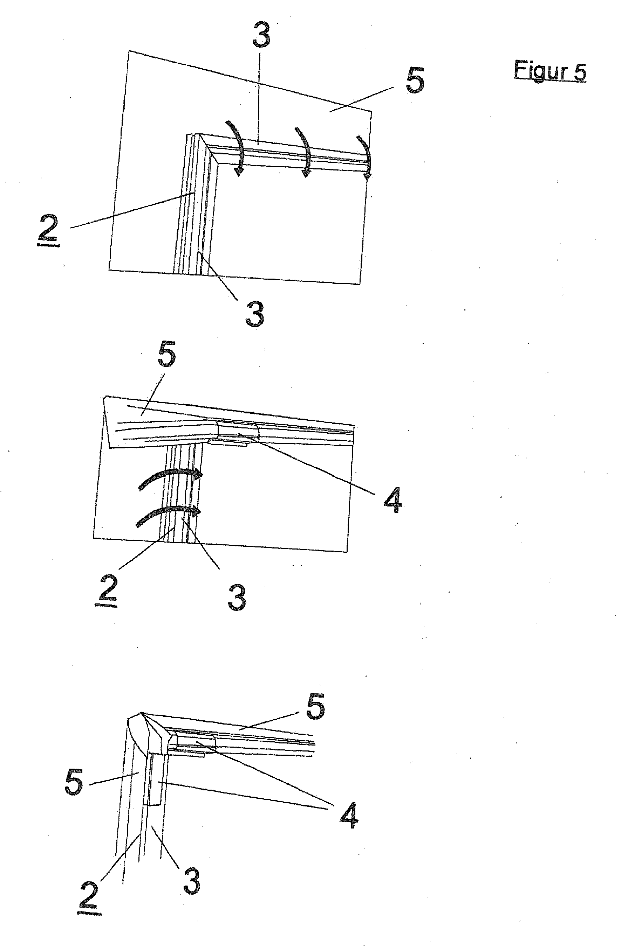

Figur 5 zeigt in 3 Ansichten nochmals die Befestigungsmöglichkeit des bahnförmigen Materials 5 an einem dargestellten Rahmen 2, der aus mehreren Klemmprofilen 3 besteht. Das bahnförmige Material 5 ist hierbei etwas größer als der Rahmen 2 zugeschnitten und wird auf den Rahmen gelegt und anschließend um das Klemmprofil 3 geschlagen. Aus der zweiten Abbildung ist ersichtlich, dass ein kurzes Klemmelement 4 zum Verspannen des bahnförmigen Material 5 verwendet wird und zwar zunächst entlang einer Seitenkante des Rahmens 2, wobei mehrere kurze Klemmelemente 4 oder ggf. lange Klemmelement 4 eingesetzt werden können.

Aus der dritten Ansicht ist ersichtlich, dass nach Verspannen der ersten Außenkante das Umschlagen des bahnförmigen Materials 5 um die rechtwinklig angeordnete Kanten des Rahmens 2 erfolgt und ebenso wieder eine Verspannung mit einem Klemmelement 4, welches wiederum in kurzer oder langer Ausführung verwendet werden kann.

Diese Art der Verspannung ermöglicht somit eine schnelle Montage des bahnförmigen Materials 5 und ebenso das Entfernen des bahnförmigen Materials 5, falls ein Austausch des Banners etc. vorgesehen ist. Zu diesem Zweck besteht lediglich die Notwendigkeit die einzelnen Klemmelemente 4 nacheinander zu lösen und das bahnförmige Material abzunehmen. Nach Auflegen eines bahnförmigen Materials kann die Verklemmung wieder mit denselben Klemmelementen 4 erfolgen, sodass lediglich hinsichtlich des Materialaustauschs nur das bahnförmige Material 5 den Gegebenheiten angepasst werden muss.

### Bezugszeichenliste

- 1: Spannvorrichtung
- 2: Spannrahmen
- 2: Rahmen
- 3: Klemmprofil
- 4: Klemmelement
- 5: bahnförmiges Material
- 10: Seitenfläche
- 11: Nut
- 12: Auskragung
- 13: Auskragung
- 20: Basisteil
- 21: Schenkel
- 22: Abkantung/Außenkante
- 23: Schenkel
- 24: Nase
- 25: Teilstück
- 26: Außenkante

## Patentansprüche

1. Spannvorrichtung (1) für flexibles bahnförmiges Material (5), umfassend zumindest ein Klemmprofil (3) mit Nuten (11) in den Seitenflächen (10) und wenigstens einem Klemmelement (4), welches unter Vorspannung zumindest eine Längskante des Klemmprofils (3) umgreift, wobei das Klemmelement (4) im Querschnitt aus einem abgewinkelten Basisteil (20) mit zwei Schenkeln (21, 23) besteht, wobei das Klemmelement (4) mit einer ersten Außenkante (22) in einer Nut (11) des Klemmprofils (3) einhängbar ist und mit dem zweiten Schenkel (23) unter Federvorspannung in einer zweiten Nut (11) des Klemmprofils (3) einrastend aufgenommen ist, wobei das elastische bahnförmige Material (5) zumindest teilweise von dem ersten Ende des Klemmelementes (4) umfassbar ist und unter Federvorspannung in eine Nut (11) und gegen die Seitenflächen (10) des Klemmprofils (3) einklemmbar ist, **dadurch gekennzeichnet, dass** ein von dem Basisteil (20) auslaufender zweiter Schenkel (23) zweimal um ca. 90° umgebogen ist und anschließend in entgegengesetzter Biegerichtung bogenförmig ausgebildet und über ein gerades Teilstück in eine um 90° abgewinkelte kurze Außenkante (26) übergeht.

2. Spannvorrichtung (1) nach Anspruch 1,
**dadurch gekennzeichnet,**
**dass** das Klemmelement (4) form- und/oder kraftschlüssig mit dem Klemmprofil (4) verbindbar ist.

3. Spannvorrichtung (1) nach Anspruch 1 oder 2,
**dadurch gekennzeichnet,**
**dass** das Klemmelement (4) mit einer ersten Außenkante (22) in einer Nut (11) des Klemmprofils (3) einhängbar ist und mit der zweiten Außenkante (26) unter Federvorspannung in einer zweiten Nut (11) des Klemmprofils (3) einrastend aufgenommen ist.

4. Spannvorrichtung (1) nach einem der Ansprüche 1, 2 oder 3,
**dadurch gekennzeichnet,**
**dass** das Klemmprofil (3) auf zumindest zwei Seitenflächen (10), vorzugsweise benachbarten Seitenflächen (10) mit einer T-förmigen Nut (11) ausgestattet ist.

5. Spannvorrichtung (1) nach einem der Ansprüche 1 bis 4,
**dadurch gekennzeichnet,**
**dass** das Klemmprofil (3) abgerundete Kanten aufweist.

6. Spannvorrichtung (1) nach einem der Ansprüche 1 bis 5,
**dadurch gekennzeichnet,**
**dass** das Klemmprofil (3) einen mehreckigen, vorzugsweise rechteckförmigen oder quadratischen Querschnitt aufweist.

7. Spannvorrichtung (1) nach einem der Ansprüche 1 bis 6,
**dadurch gekennzeichnet,**
**dass** das Klemmelement (4) und -profil (3) an die Größe der bahnförmigen Materialien (5) angepasst ist.

8. Spannvorrichtung (1) nach einem der Ansprüche 1 bis 7,
**dadurch gekennzeichnet,**
**dass** das Klemmelement (4) aus einem Federblech, Extrusionsprofil oder einem Strangpressprofil aus Aluminium oder Kunststoff besteht.

9. Spannvorrichtung (1) nach einem der Ansprüche 1 bis 8,
**dadurch gekennzeichnet,**
**dass** das Klemmelement (4) an die Breite der bahnförmigen Materialien (5) angepasst und einstückig ausgebildet ist oder aus mehreren Teilstücken besteht, welche beabstandet zueinander angeordnet sind oder zumindest im Eckbereich des bahnförmigen Materials (5) angeordnet sind.

10. Spannvorrichtung (1) nach einem der Ansprüche 1 bis 9,
**dadurch gekennzeichnet,**
**dass** das Klemmelement (4) im Querschnitt aus einem abgewinkelten Basisteil (20) besteht, welches mit einem ersten Schenkel (21) unter einem Winkel von 120 bis 150 Grad abgewinkelt ist und eine zweite Abkantung von circa 80 bis 90 Grad aufweist, die eine deutlich verkürzte Länge aufweist, sodass diese Abkantung innerhalb der T-förmigen Nut (11) unter den Nutbegrenzungen der Klemmprofile (3) zu liegen kommt.

11. Spannvorrichtung (1) nach einem oder mehreren der Ansprüche 1 bis 10,
**dadurch gekennzeichnet,**
**dass** das Klemmelement (4) im Querschnitt ein rechtwinkeliges Basisteil (20) aufweist, welches einenends eine erste Abkantung in Richtung auf die zweite Außenkante (26) und eine zweite kurze annähernd rechtwinkelige Abkantung (24) in umgekehrter Richtung als erste Außenkante (22) aufweist und anderenends in eine rastnasenförmigen Form in Richtung auf die erste Abkantung übergeht und ein gerades Teilstück (25) aufweist, welches endseitig eine annähernd rechtwinkelige Abkantung in umgekehrter Richtung als zweite Außenkante (26) aufweist.

12. Spannvorrichtung (1) nach einem oder mehreren der Ansprüche 1 bis 11,
**dadurch gekennzeichnet,**
**dass** das bahnförmige Material (5) durch die Klemmelemente (4) gegen die Seitenflächen (10) des Klemmprofils (3) pressbar ist.

13. Spannvorrichtung (1) nach einem oder mehreren der Ansprüche 1 bis 12,
**dadurch gekennzeichnet,**
**dass** das bahnförmige Material (5) entlang zumindest zwei paralleler Seitenkanten mit zumindest einem Klemmelement (4) verspannbar ist oder dass das bahnförmige Material (5) entlang sämtlicher Seitenkanten mit jeweils zumindest einem Klemmelement (4) verspannbar ist.

## Claims

1. Tensioning device (1) for a flexible web-like material (5), comprising at least one clamping profile (3) with grooves (11) in the side faces (10) and at least one clamping element (4) which grips around at least one longitudinal edge of the clamping profile (3) with initial tension, wherein the clamping element (4) consists of an angled basic part (20) with two legs (21, 23) in a cross-section, wherein the clamping element (4) may be hung into a groove (11) of the clamping profile (3) with a first outer edge (22) and is received, with the second leg (23), in a second groove (11) of the clamping profile (3) in a catching manner with spring pretension, wherein the elastic web-like material (5) may be at least partially gripped around by the first end of the clamping element (4) and clamped into a groove (11) and against the side faces (10) of the clamping profile (3) with spring pretension, **characterized in that** a second leg (23) extending from the basic part (20) is bent twice by approx. 90° and is subsequently embodied in a bow in the opposite bending direction and passes over, via a straight section, into a short outer edge (26) angled by 90°.

2. Tensioning device (1) according to claim 1, **characterized in that** the clamping element (4) may be connected to the clamping profile (4) with a form-fit and/or a positive fit.

3. Tensioning device (1) according to claim 1 or 2, **characterized in that** the clamping element (4) may be hung, with a first outer edge (22), into a groove (11) of the clamping profile (3) and is received, with the second outer edge (26), in a second groove (11) of the clamping profile (3) in a catching manner with spring pretension.

4. Tensioning device (1) according to one of claims 1, 2 or 3, **characterized in that** the clamping profile (3) is equipped, on at least two side faces (10), preferably adjacent side faces (10), with a T-shaped groove (11).

5. Tensioning device (1) according to one of claims 1 to 4, **characterized in that** the clamping profile (3) has rounded edges.

6. Tensioning device (1) according to one of claims 1 to 5, **characterized in that** the clamping profile (3) has a polygonal, preferably rectangular or square cross-section.

7. Tensioning device (1) according to one of claims 1 to 6, **characterized in that** the clamping element (4) and the clamping profile (3) are adapted to the size of the web-like materials (5).

8. Tensioning device (1) according to one of claims 1 to 7, **characterized in that** the clamping element (4) consists of a spring plate, an extrusion profile or an extruded section of aluminium or plastics.

9. Tensioning device (1) according to one of claims 1 to 8, **characterized in that** the clamping element (4) is adapted to the width of the web-like materials (5) and is integrally formed or consists of several sections which are arranged spaced apart with respect to each other, or are at least arranged in the corner region of the web-like material (5).

10. Tensioning device (1) according to one of claims 1 to 9, **characterized in that** the clamping element (4) consists, in a cross-section, of an angled basic part (20) which is angled with a first leg (21) at an angle of 120 to 150 degrees and comprises a second chamfer of approx. 80 to 90 degrees having a clearly shortened length so that this chamfer will come to lie within the T-shaped groove (11) under the groove boundaries of the clamping profiles (3).

11. Tensioning device (1) according to one or more of claims 1 to 10, **characterized in that** the clamping element (4) has, in the cross-section, a rectangular basic part (20) which comprises, at one end, a first chamfer in the direction towards the second outer edge (26), and a second, short, nearly rectangular chamfer (24) in the opposite direction as a first outer edge (22), and at the other end passes over into a stop nose-like shape in the direction towards the first chamfer and comprises a straight section (25) which comprises, at the end side, a nearly rectangular chamfer in the opposite direction as a second outer edge (26).

12. Tensioning device (1) according to one or more of claims 1 to 11, **characterized in that** the web-like material (5) may be pressed against the side faces (10) of the clamping profile (3) by the clamping elements (4).

13. Tensioning device (1) according to one or more of claims 1 to 12, **characterized in that** the web-like material (5) may be tensioned along at least two parallel side edges with at least one clamping element (4), or that the web-like material (5) may be tensioned along all side edges with at least one clamping element (4) each.

## Revendications

1. Dispositif de serrage (1) pour matériau flexible en forme de bande (5), comprenant au moins un profilé de pincement (3) doté de rainures (11) dans les surfaces latérales (10) et d'au moins un élément de pincement (4), lequel entoure sous précontrainte au moins un bord longitudinal du profilé de pincement (3), dans lequel l'élément de pincement (4) est constitué dans la section transversale d'une partie de base (20) coudée avec deux pattes (21, 23), dans lequel l'élément de pincement (4) peut être accroché avec un premier bord extérieur (22) dans une rainure (11) du profilé de pincement et est reçu sous précontrainte élastique en emboîtement avec la deuxième patte (23) dans une deuxième rainure (11) du profilé de pincement (3), dans lequel le matériau élastique en forme de bande (5) peut être saisi au moins en partie par la première extrémité de l'élément de pincement (4) et peut être coincé sous précontrainte élastique dans une rainure (11) et contre les surfaces latérales (10) du profilé de pincement (3), **caractérisé en ce qu'**une deuxième patte (23) s'étendant depuis la partie de base (20) est courbée deux fois d'environ 90° et est ensuite conçue en forme d'arc dans la direction de courbure opposée et dépasse ensuite en un court bord extérieur (26) coudé à 90° par le biais d'une portion droite.

2. Dispositif de serrage (1) selon la revendication 1, **caractérisé en ce que** l'élément de pincement (4) peut être rattaché au profilé de pincement (3) par complémentarité de forme et/ou par engagement par force.

3. Dispositif de serrage (1) selon la revendication 1 ou 2, **caractérisé en ce que** l'élément de pincement (4) peut être accroché avec un premier bord extérieur (22) dans une rainure (11) du profilé de pincement (3) et est reçu sous précontrainte élastique en emboîtement avec le deuxième bord extérieur (26) dans une deuxième rainure (11) du profilé de pincement (3).

4. Dispositif de serrage (1) selon l'une des revendications 1, 2 ou 3, **caractérisé en ce que** le profilé de pincement (3) est pourvu d'une rainure en T (11) sur au moins deux surfaces latérales (10), de préférence des surfaces latérales adjacentes (10).

5. Dispositif de serrage (1) selon l'une des revendications 1 à 4, **caractérisée en ce que** le profilé de pincement (3) présente des bords arrondis.

6. Dispositif de serrage (1) selon l'une des revendications 1 à 5, **caractérisé en ce que** le profilé de pincement (3) présente une section transversale polygonale, de préférence de forme rectangulaire ou carrée.

7. Dispositif de serrage (1) selon l'une des revendications 1 à 6, **caractérisé en ce que** le profilé de pincement (3) et l'élément de pincement (4) sont adaptés à la taille du matériau en forme de bande (5).

8. Dispositif de serrage (1) selon l'une des revendications 1 à 7, **caractérisé en ce que** l'élément de pincement (4) est constitué d'une tôle élastique, d'un profilé extrudé ou d'un profilé de coulée continue en aluminium ou plastique.

9. Dispositif de serrage (1) selon l'une des revendications 1 à 8, **caractérisé en ce que** l'élément de pincement (4) est adapté à la largeur du matériau en forme de bande (5) et est conçu d'une pièce ou est constitué de plusieurs portions, lesquelles sont agencées écartées l'une de l'autre ou sont agencées au moins dans la zone d'angle du matériau en forme de bande (5).

10. Dispositif de serrage (1) selon l'une des revendications 1 à 9, **caractérisé en ce que** l'élément de pincement (4) est constitué dans la section transversale partie de base (20) coudée, laquelle est coudée avec une première patte (21) selon un angle de 120 à 150° et présente un second coude d'environ 80 à 90°, lequel présente une longueur significativement raccourcie, de sorte que ce coude vient reposer à l'intérieur de la rainure en forme de T (11) sous la délimitation de rainure du profilé de pincement (3).

11. Dispositif de serrage (1) selon l'une ou plusieurs des revendications 1 à 10, **caractérisé en ce que** l'élément de pincement (4) présente dans la section transversale une partie de base (20) rectangulaire, laquelle présente à une extrémité un premier coude dans la direction du deuxième bord extérieur (26) et un deuxième coude court approximativement rectangulaire (24) dans la direction inverse du premier bord extérieur (22) et dépasse à l'autre extrémité dans la direction du premier coude en forme d'ergot d'encliquetage et présente une portion droite (25), laquelle présente d'un côté un coude approximativement rectangulaire dans la direction inverse du deuxième bord extérieur (26).

12. Dispositif de serrage (1) selon l'une ou plusieurs des revendications 1 à 11, **caractérisé en ce que** le matériau en forme de bande (5) peut être pressé contre les surfaces latérales (10) du profilé de pincement (3) par l'élément de pincement (4).

13. Dispositif de serrage (1) selon l'une ou plusieurs des revendications 1 à 11, **caractérisé en ce que** le matériau en forme de bande (5) est serrable le long d'au moins deux bords latéraux parallèles avec au moins un élément de pincement (4) ou **en ce que** le matériau en forme de bande (5) est serrable le long de tous les bords latéraux avec respectivement au moins un élément de pincement (4).
